# NOUVEAU FASCICULE DE BREVET EUROPEEN

(11) **EP 1 632 109 B2**
(45) Date de publication et mention de la décision concernant l'opposition: **31.05.2017**
(45) Mention de la délivrance du brevet: 20.08.2008
(21) Numéro de dépôt: 04767225.8
(22) Date de dépôt: 01.06.2004
(51) Int. Cl.: H05B 3/50, H05B 3/12, B60H 1/22

(54) **DISPOSITIF DE CHAUFFAGE ELECTRIQUE, NOTAMMENT POUR UN VEHICULE AUTOMOBILE**
ELEKTRISCHE HEIZEINRICHTUNG INSBESONDERRE FÜR EIN KRAFTFAHRZEUG
ELECTRIC HEATING DEVICE, PARTICULARLY FOR A MOTOR VEHICLE

(30) Priorité: 06.06.2003 FR 0306890
(43) Date de publication de la demande: 08.03.2006
(73) Titulaire: VALEO SYSTEMES THERMIQUES, 78321 Le Mesnil Saint Denis (FR)
(72) Inventeur: PIERRON, Frédéric, F-78120 Rambouillet (FR); MARANGE, Christophe, F-78400 Chatou (FR); TERRANOVA, Gilbert, F-78610 Le Perray-en-Yvelines (FR); COLETTE, Olivier, F-78320 Le Mesnil Saint-Denis (FR)
(74) Mandataire: Metz, Gaëlle
(86) Numéro de dépôt international: PCT/FR2004/001354
(87) Numéro de publication internationale: WO 2005/004538

(56) Documents cités:
- EP-A- 0 616 486
- DE-A1- 225 501
- DE-C2- 19 902 050
- DE-U1- 9 407 104
- FR-A- 2 794 605
- FR-A- 2 801 467
- US-A- 5 057 672
- US-A- 5 326 418
- US-A- 5 377 298
- US-A- 5 562 844
- US-A- 5 854 471
- US-B2- 6 392 207

## Description

L'invention concerne un dispositif de chauffage d'air, en particulier pour des véhicules automobiles.

Dans les réalisations existantes, le réchauffage de l'air de l'habitacle d'un véhicule automobile ou encore le désembuage ou le dégivrage est réaliser par un échange de chaleur entre un flux d'air et un liquide de refroidissement du moteur, situé dans le conduit de circulation de l'air à réchauffer. Cependant, au démarrage du véhicule, pendant un laps de temps, les calories véhiculées par le liquide de refroidissement du moteur peuvent s'avérer insuffisantes pour garantir un chauffage rapide et efficace de l'habitacle.

Dans d'autres réalisations, on utilise en complément un dispositif de chauffage électrique sur le trajet du flux d'air qui se dirige vers l'habitacle, immédiatement en aval de l'échangeur de chaleur.

Le dispositif de chauffage est mis en fonctionnement temporairement jusqu'à ce que l'échangeur de chaleur puisse assurer seul le chauffage de l'air.

Un tel dispositif de chauffage comporte en général des éléments résistifs de type à coefficient de température positif (CTP). Ces éléments résistifs sont capables de s'autoréguler en température, ce qui permet d'éviter un échauffement excessif.

Les résistances CTP se présentent sous forme de petits blocs ou de "pierres" disposés dans des électrodes. Un ensemble de pierres CTP espacées les unes des autres peuvent être disposées entre les électrodes et alimentées par celles-ci, formant ainsi un bloc de chauffe.

Des éléments radiants sont associés aux électrodes pour favoriser l'échange thermique avec le flux d'air traversant le dispositif de chauffage. Ces éléments radiants peuvent être formés par des rubans métalliques plissés ou ondulés disposés en parallèle et maintenues mécaniquement sur les électrodes, entre lesquelles sont disposées des pierres CTP. Le bloc de chauffe ainsi constitué est disposé dans un cadre de support.

Un circuit de commande peut en outre être logé sur le cadre de support pour alimenter sélectivement les électrodes et ajuster la puissance délivrée par le dispositif de chauffage.

Ce dispositif de chauffage est assorti d'un commutateur d'alimentation électrique, de type transistor, destiné à sélectionner les électrodes.

Dans les réalisations existantes, le bloc de chauffe, le circuit de commande et le cadre de support forment un ensemble unitaire. Or il peut être souhaitable de faire varier la surface du bloc de chauffe en fonction de la puissance de chauffage requise.

Par ailleurs, un tel ensemble unitaire ne permet pas d'intervenir localement sur une zone du bloc de chauffe en cas de dysfonctionnement sur celle-ci. En effet, les éléments constitutifs du bloc de chauffe sont maintenus ensemble soit par un système de lames de ressort qui exerce une pression mécanique soit par le cadre de support comme décrit dans la demande de brevet FR 2 794 605. Ainsi, il n'est pas possible de remplacer certains des éléments constitutifs du bloc de chauffe indépendamment de l'ensemble unitaire. Il en est de même du dispositif de chauffage décrit dans le document DE 199 02 050. En cas de dysfonctionnement localisé, l'ensemble unitaire doit donc être remplacé dans son intégralité et par suite les coûts générés par un dysfonctionnement sont importants.

En outre, les dispositifs de chauffage électriques de l'art antérieur ont une structure complexe et coûteuse en raison du nombre de pièces constitutives, du temps d'assemblage nécessaire et de la sensibilité à la corrosion des électrodes d'alimentation des résistances CTP.

L'invention vient améliorer la situation.

Elle propose à cet effet un dispositif de chauffage électrique, comprenant un boîtier (15) pouvant être traversé par de l'air à chauffer délimitant un espace de chauffe piloté par un circuit de commande d'alimentation électrique relié à une source d'alimentation, l'espace de chauffe comprenant des modules chauffants électriques (14), chaque module chauffant étant séparable de l'espace de chauffe et constitué par un premier et un deuxième rubans métalliques (10, 10') et par des éléments résistifs à coefficient de température positif (12) fixés entre les deux rubans métalliques, le boîtier (15) comportant des compartiments de chauffe (16) conformés pour loger un nombre de modules chauffants (14) choisi en fonction de la puissance calorifique totale requise, caractérisé en ce que le boîtier (15) comprend en outre des compartiments d'alimentation (20) conformés pour loger des modules d'alimentation (200) respectifs propres à être raccordés au circuit de commande d'alimentation électrique et à un groupe d'au moins un module chauffant (14), chaque module d'alimentation comprenant un élément de commutation électronique (203).

En particulier, les éléments résistifs à coefficient de température positif peuvent être fixés entre les deux rubans métalliques, par collage.

Les éléments résistifs à coefficient de température positif peuvent également être fixés entre les deux rubans métalliques, par soudage.

Le circuit de commande d'alimentation est disposé sur un côté du boîtier, dans un compartiment de commande d'alimentation tandis que les compartiments d'alimentation sont disposés en parallèle à proximité du circuit de commande suivant la direction transversale et à distance égale entre eux.

Chaque module d'alimentation comprend en outre un support métallique relié à la source d'alimentation, sur lequel est fixé l'élément de commutation électronique.

En particulier, le support métallique comporte un surmoulage autour de l'élément de commutation électronique propre à maintenir les connexions électriques avec l'élément de commutation électronique.

La zone délimitée par le surmoulage du support métallique peut comprendre un revêtement étanche parmi le gel silicone, la colle et les composés qui permettent d'assurer une protection de l'élément de commutation électronique.

En complément, le support métallique peut comprendre des ouvertures de type persiennes agencées sur sa surface, ces ouvertures étant traversées par l'air à réchauffer pour faciliter la dissipation de chaleur de l'élément de commutation électronique.

Selon un autre aspect de l'invention, chaque ruban métallique d'un module chauffant est maintenu sur au moins une barrette longitudinale de longueur adaptée à celle des rubans.

Les barrettes de chaque module chauffant sont munies d'une fiche de connexion respective sur une extrémité, les fiches de connexion des barrettes étant disposées du même côté lors de l'assemblage du module chauffant.

En particulier, pour chaque module chauffant, le premier ruban métallique peut avoir une longueur supérieure à celle du deuxième ruban métallique, ce qui crée un renfoncement de forme générale rectangulaire dans le module chauffant.

Les compartiments d'alimentation ont une forme générale rectangulaire tandis que la largeur d'un compartiment d'alimentation est sensiblement égale à la largeur d'un compartiment de chauffe.

Selon un mode de réalisation particulier, chaque module d'alimentation est propre à être raccordé à un groupe de deux modules chauffants, tandis que les deux modules chauffants sont disposés côte à côte.

Selon ce mode de réalisation de l'invention, les compartiments de chauffe successifs sont en contact et alignés suivant la direction transversale, les renfoncements de deux modules chauffants successifs formant ainsi un rectangle dans lequel est agencé un compartiment d'alimentation.

Dans un autre mode de réalisation, chaque module d'alimentation est propre à être raccordé à un module chauffant, tandis que le module d'alimentation et le module chauffant associé sont raccordés pour former un élément modulaire, chaque compartiment d'alimentation formant avec un compartiment de chauffe associé un compartiment modulaire.

Selon un autre aspect de l'invention, le dispositif de chauffage comprend un couvercle fixé sur le boîtier par un système de raccord.

Les rubans métalliques de chaque module chauffant peuvent être munis d'un revêtement isolant électrique et/ou de protection contre la corrosion.

Le compartiment de commande d'alimentation est séparé des compartiments d'alimentation.

L'invention propose également un procédé de montage d'un dispositif de chauffage tel quel décrit précedemment comprenant un boîtier pouvant être traversé par de l'air à chauffer, à partir de modules chauffants électriques et de modules d'alimentation propres à être reliés à un circuit de commande d'alimentation électrique et à un groupe d'au moins un module chauffant, caractérisé en ce qu'il comprend les étapes consistant à:
1) placer les modules d'alimentation dans le boîtier,
2) placer les modules chauffants dans le boîtier,
3) positionner et fixer un couvercle sur le boîtier,
4) effectuer une opération de soudage pour un raccord électrique entre chaque module d'alimentation et le groupe de modules chauffants associé,
5) positionner le circuit de commande d'alimentation électrique sur un compartiment de commande d'alimentation sur un côté du boîtier,
6) effectuer une opération de soudage supplémentaire pour un raccord électrique entre les connexions électriques et le circuit de commande d'alimentation,
7) positionner et fixer un capot sur le compartiment de commande.

D'autres caractéristiques et avantages de l'invention apparaîtront à l'examen de la description détaillée ci-après, et des dessins annexés sur lesquels:
- la figure 1A est une vue générale d'un conduit de circulation d'un véhicule automobile;
- la figure 1B est un schéma représentant une vue latérale d'un ruban métallique selon l'invention;
- la figure 1C est un schéma représentant une vue de haut d'un module chauffant, selon l'invention;
- la figure 1D est une vue en perspective d'un module chauffant selon l'invention;
- la figure 1E est un schéma représentant une vue de haut d'un module chauffant;
- la figure 2 est une vue de face du dispositif de chauffage selon l'invention,
- la figure 3 est une vue en perspective d'un module d'alimentation selon l'invention;
- la figure 4 est une vue de face du dispositif de chauffage selon l'invention, mettant en évidence l'espace occupé par les modules d'alimentation;
- la figure 5 est une vue de haut partielle d'un dispositif de chauffage selon l'invention; et
- la figure 6 représente les points de connexion du dispositif de chauffage avec le circuit de commande d'alimentation.

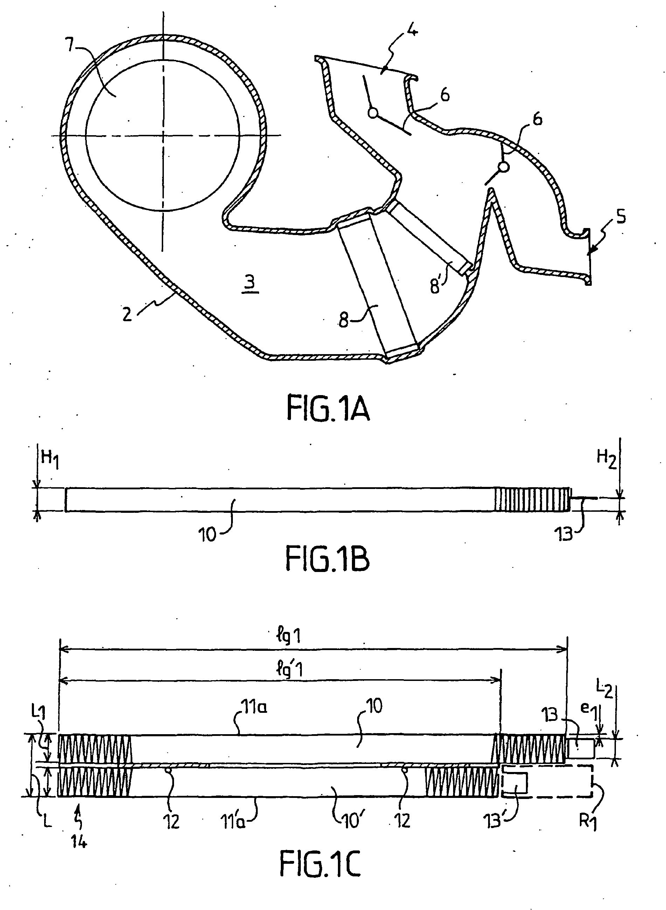

La figure 1A représente un conduit de circulation d'air d'un véhicule automobile. Ce conduit comprend un boîtier 2 délimitant un canal 3 destiné à être traversé par l'air à réchauffer. L'air traversant le canal s'achemine vers des bouches de chauffage et de désembuage/dégivrage 4 et 5 avant d'être distribué dans l'habitable via les volets de mixage et de distribution 6.

Le débit d'air dans le canal 3 est produit par un ventilateur 7 ou un pulseur, à partir d'un flux d'air extérieur ou d'un flux d'air en recirculation provenant de l'habitacle. Le réchauffage de l'air, lorsqu'il est requis, peut être réalisé par un échangeur de chaleur 8 fonctionnant avec le liquide de refroidissement du moteur et par un dispositif de chauffage électrique 8'. L'échangeur de chaleur 8 est disposé en amont du dispositif de chauffage 8', dans le canal 3. En variante, le réchauffage de l'air peut être réalisé par le seul dispositif de chauffage électrique 8'.

Le dispositif de chauffage électrique peut occuper toute la section du canal 3. En variante, il peut occuper une partie de la section du canal 3, auquel cas seul une partie du flux d'air traverse le dispositif de chauffage électrique 8' tandis que l'autre partie le contourne.

Dans la suite de la description détaillée, le dispositif de chauffage électrique 8' sera décrit en référence aux figures 1B à 6.

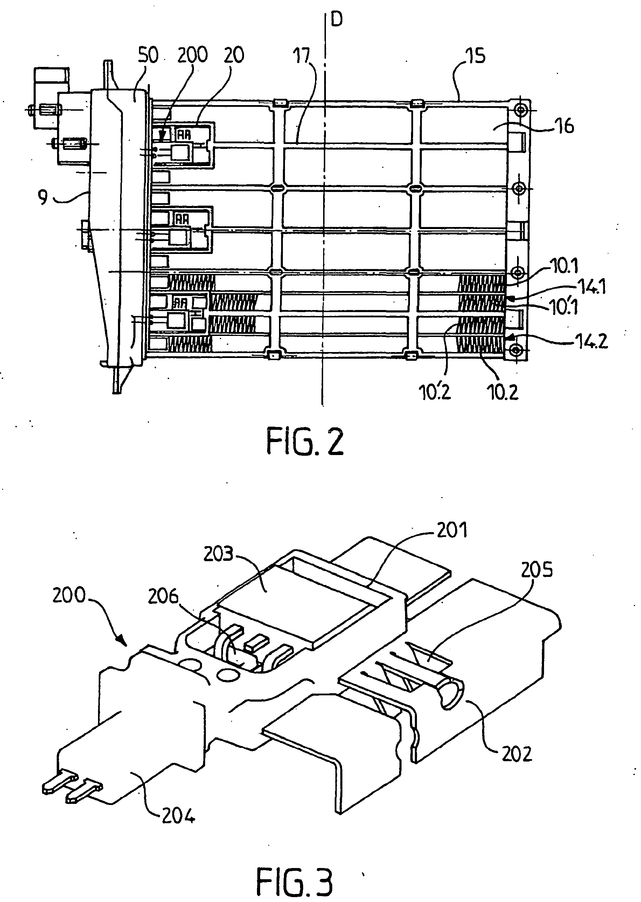

La figure 2 est un schéma du dispositif de chauffage électrique selon l'invention. Le dispositif de chauffage électrique comprend un boîtier 15, par exemple en plastique, pouvant être traversé par de l'air à chauffer et délimitant un espace de chauffe piloté par un circuit de commande d'alimentation électrique relié à une source d'alimentation. L'espace de chauffe comporte des modules chauffants électriques 14. Dans le boîtier 15 sont prévus des compartiments de chauffe 16 conformés pour loger un nombre de modules chauffants 14 choisi en fonction de la puissance calorifique requise.

Les compartiments de chauffe 16 sont disposés parallèlement les uns aux autres suivant une direction transversale D. Chaque compartiment de chauffe s'étend en particulier sur toute la longueur du boîtier, de manière à être directement exposés à un flux d'air les traversant.

Le pilotage du dispositif de chauffage électrique 8' est réalisé par le circuit de commande d'alimentation. Le circuit de commande d'alimentation est monté sur une plaque de circuit imprimé et logé sur l'un des côtés du boîtier 15, dans un compartiment de commande d'alimentation 50. Le circuit de commande est en outre protégé par un capot 9.

Le circuit de commande d'alimentation peut être monté soit perpendiculairement à l'axe transversal D, soit parallèlement à l'axe transversal D.

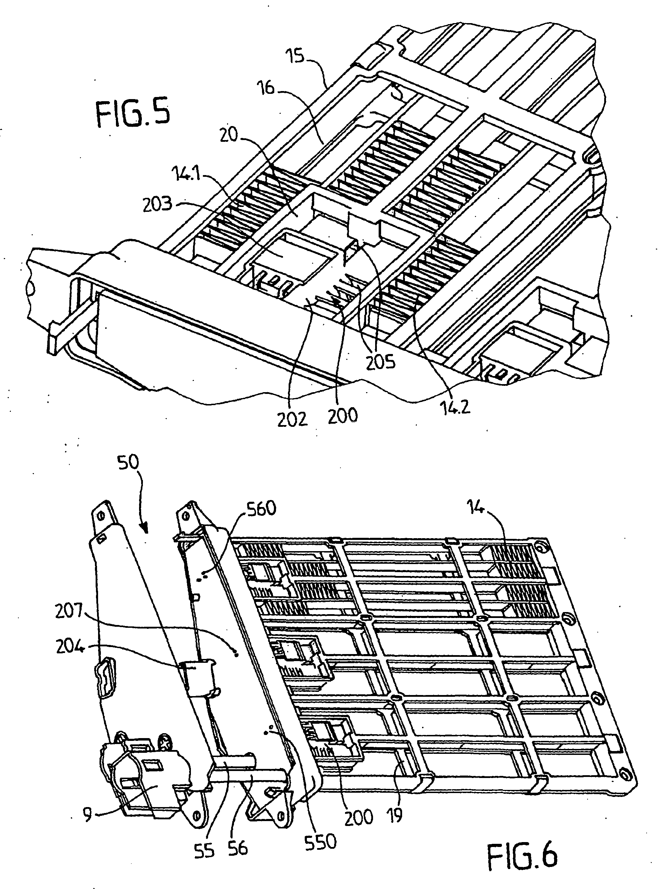

En référence à la figure 6, le circuit de commande reçoit des informations à travers un connecteur 204 et est relié à une source d'alimentation par des bus barres 55 et 56 ou à travers le connecteur 204. Par exemple, le bus barre 55 est au potentiel + 12 V tandis que le bus barre 56 est à la masse GND.

Le boîtier comprend en outre des compartiments d'alimentation 20 conformés pour loger des modules d'alimentation 200. Ces modules d'alimentation sont raccordés au circuit de commande d'alimentation et à un groupe de modules chauffants comprenant au moins un module chauffant. Chaque module d'alimentation 200 comporte un élément de commutation électronique ou interrupteur d'alimentation propre à commuter l'alimentation d'un module chauffant associé.

Le terme "module" est utilisé ici pour désigner un élément indépendant, distinct des éléments analogues et qui peut être facilement séparable de l'espace de chauffe délimiter par le cadre.

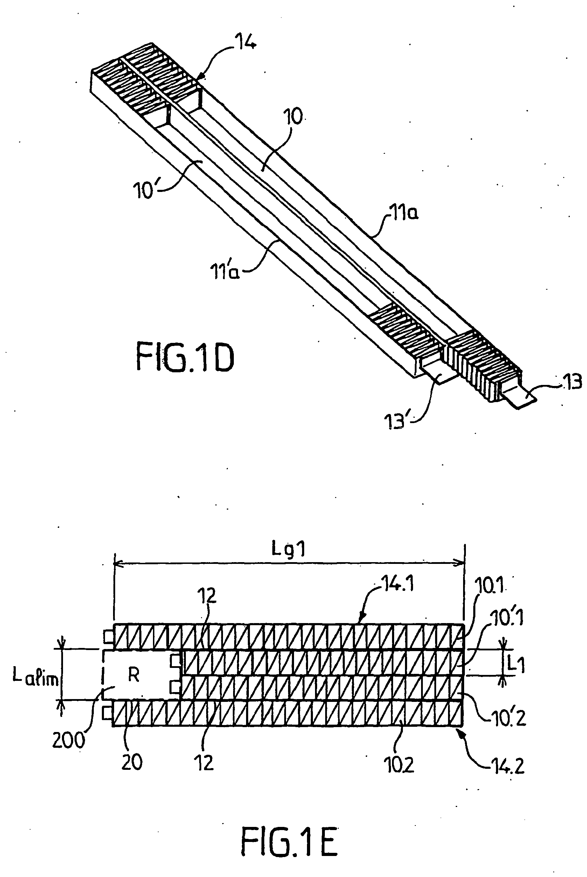

Les figures 1C et 1D représentent la structure d'un module chauffant selon l'invention. Un module chauffant individuel 14 comprend un premier ruban métallique 10 d'une première longueur Ig1 et un deuxième ruban métallique 10' d'une deuxième longueur Ig'1.

Les rubans métalliques 10 et 10' sont de forme plissée ou ondulée et peuvent avoir la même hauteur H1.

Sur les figures des dessins, seules les extrémités des rubans métalliques sont représentées par souci de clarté. Bien entendu, les rubans métalliques s'étendent également entre ces deux extrémités.

En référence à la figure 1C, des éléments résistifs à coefficient de température positif (CTP) sont fixés entre les deux rubans métalliques d'un même module chauffant 14. Ces éléments résistifs se présentent sous forme d'une quantité prédéterminée de pierres CTP 12. Les résistances CTP sont protégées intrinsèquement contre les échauffements et la surintensité.

Les pierres CTP 12 peuvent être fixées entre les deux rubans métalliques 10 et 10' par collage.

En variante, les pierres CTP 12 peuvent être fixées entre les deux rubans métalliques 10 et 10' par soudage.

En référence à la figure 1C, chaque ruban métallique 10 et 10' d'un module chauffant 14 peut être maintenu par collage sur au moins une barrette longitudinale 11a et 11'a respectivement, de longueur adaptée à celle des rubans.

En particulier, lors de l'assemblage d'un module chauffant 14, les rubans métalliques 10 et 10' sont raccordés de sorte que leurs barrettes respectives soient positionnées à l'extérieur du module chauffant 14.

Chaque barrette 11a et 11'a d'un module chauffant 14 est munie à une extrémité d'une fiche de connexion, 13 et 13' respectivement, pour l'alimentation électrique. Chaque barrette peut avoir une forme générale de plaque allongée de longueur adaptée à celle du ruban métallique, avec un prolongement perpendiculairé muni de la fiche de connexion.

Les fiches de connexion 13 et 13', représentées sur les figures 1B à 1D, sont fixées à une extrémité des rubans métalliques 10 et 10'. Chaque module chauffant 14 est assemblé de sorte que les fiches de connexion 13 et 13' soient disposées du même côté.

La figure 1B est une vue de face du module chauffant 14 selon l'invention, du côté du premier ruban métallique 10. Le premier ruban métallique 10 a une hauteur H1 qui peut être égale à la hauteur du deuxième ruban métallique 10'. La fiche de connexion 13 est fixée à une hauteur H2 sur le premier ruban métallique 10. En particulier, la fiche de connexion 13' du deuxième ruban métallique peut être fixée à la même hauteur H2 sur le deuxième ruban métallique.

Les rubans métalliques 10 et 10' peuvent avoir la même largeur L1 et des barrettes associées 11a et 11'a de même épaisseur e1.

Dans un mode de réalisation particulier, le premier ruban métallique 10 peut avoir une longueur l_{g}1 supérieure à la longueur l_{g}'1 du deuxième ruban métallique, ce qui crée un renfoncement R1 rectangulaire dans le module chauffant associé. La suite de la description sera faite en référence à ce mode de réalisation à titre d'exemple non limitatif.

L'assemblage des rubans métalliques 10 et 10' est alors tel que:
- l'extrémité libre (i.e. l'extrémité qui ne comporte pas la fiche de connexion) du premier ruban métallique 10 est alignée avec l'extrémité libre du deuxième ruban métallique 10';
- l'autre extrémité munie de la fiche de connexion 13 du premier ruban métallique 10 est décalée par rapport à l'autre extrémité du deuxième ruban métallique 10'.

Chaque module d'alimentation 200 peut notamment être raccordé à deux modules chauffants 14.1 et 14.2, comme représenté sur la figure 2, ces deux modules chauffants étant disposés côte à côte. Ainsi, le deuxième ruban métallique 10'.1 du module chauffant 14.1 et le deuxième ruban métallique 10'.2 du module chauffant 14.2 sont adjacents.

Les rubans métalliques 10 et 10' peuvent avoir des formes sinusoïdales, triangulaires, rectangulaires ou trapézoïdales.

Le matériau constitutif des rubans de l'aluminium ou du cuivre.

L'épaisseur d'un ruban métallique doit être suffisante pour permettre le travail d'un feuillard métallique, mais rester limitée pour éviter une résistance aérolique trop importante.

La structure du module chauffant et la fixation des pierres CTP par collage présente l'avantage de ne pas nécessiter de tube en métal conducteur pour maintenir les pierres CTP, ni d'élément mécanique supplémentaire, tel qu'un ressort. En outre, le montage de cette structure de module chauffant par collage est simple et peu coûteuse.

En référence à la figure 2, le boîtier 15 du dispositif de chauffage de l'invention comprend des parois longitudinales 17 qui délimitent les compartiments de chauffe 16. Chaque compartiment de chauffe 16 est conformé pour recevoir les différents modules chauffants 14. Chaque module chauffant 14 intégré dans le dispositif de chauffage est calé dans un compartiment de chauffe 16 contre les parois longitudinales 17. Ainsi, chaque module chauffant peut être ajouté ou retiré du dispositif de chauffage, indépendamment des autres modules chauffants et en fonction de la puissance calorifique totale souhaitée.

Les compartiments d'alimentation 20, sont de forme générale rectangulaire et sont propres à loger un module d'alimentation 200 pour alimenter les modules chauffants 14. Dans le mode de réalisation représenté sur la figure 2, un module d'alimentation 200 est chargé de l'alimentation de deux modules chauffants. Le premier ruban 10 a une longueur supérieure à celle du deuxième ruban 10', ce qui permet d'optimiser l'occupation de l'espace de chauffe.

La figure 3 est une vue en perspective d'un module d'alimentation 200. Chaque module d'alimentation 200 comprend un interrupteur d'alimentation classique 203, par exemple un transistor MOSFET, intégré par brasage sur un support métallique 202.

Le support métallique 202 est conducteur d'électricité et est réalisé par exemple en cuivre, en alliage de cuivre ou de préférence étamé. Le support métallique 202 est intégré dans le compartiment d'alimentation 20 par un surmoulage 201.

Le surmoulage 201 est disposé autour de l'interrupteur d'alimentation 203 et permet de maintenir les connexions électriques avec l'interrupteur d'alimentation 203. En outre, le surmoulage contribue à la protection de ce dernier.

Le surmoulage peut recouvrir l'interrupteur d'alimentation 203 partiellement ou entièrement.

Les modules d'alimentation 200 du dispositif de chauffage selon l'invention sont positionnés dans le flux d'air à réchauffer.

La zone délimitée par le surmoulage 201 du support métallique comprend un revêtement étanche 206 pour protéger l'interrupteur d'alimentation 203 contre la corrosion, les projections d'eau ou la poussière. Ce revêtement peut être du gel silicone, de la colle ou un composé propre à protéger l'interrupteur d'alimentation.

Le module d'alimentation 200 comprend également des ouvertures ou persiennes 205 formées dans le support métallique 202. Ces ouvertures 205 sont traversées par l'air à réchauffer pour dissiper la chaleur de l'interrupteur électronique 203 et contribuent ainsi à son refroidissement.

Les dimensions du support métallique 202 sont choisies en fonction du refroidissement requis pour l'interrupteur d'alimentation 203 et de son impact sur l'équilibre thermique entre les flux d'air à gauche et à droite, lorsque le dispositif de chauffage 8' est monté dans un appareil de climatisation.

En complément, le circuit de commande est disposé sur un côté du boîtier 15, dans le compartiment de commande d'alimentation 50 et les compartiments d'alimentation 20 sont disposés en parallèle à proximité du circuit de commande, suivant la direction transversale D, et à distance égale entre eux.

L'interrupteur d'alimentation 203 et le circuit de commande qui le pilote assurent l'alimentation du dispositif de chauffage électrique.

Le circuit de commande comporte également des moyens de variation de puissance propres à faire varier la puissance calorifique totale fournie par le dispositif de chauffage. Ces moyens de variation de puissance fonctionnent par modulation de la largeur d'impulsion de la tension délivrée à chaque module chauffant.

Dans le mode de réalisation particulier où un module d'alimentation est associé à un groupe de deux modules chauffants, comme représenté sur la figure 2, l'espace occupé par les compartiments d'alimentation 200 peut être optimisé par rapport à l'espace de chauffe en choisissant les dimensions des compartiments d'alimentation 20 en fonction de celles des compartiments de chauffe 16.

En particulier, les compartiments d'alimentation 200 peuvent avoir une forme générale rectangulaire et une largeur Lₐₗᵢₘ égale à la largeur L des compartiments de chauffe 16.

De plus, les compartiments de chauffe successifs 16 sont disposés côte à côte et alignés suivant la direction transversale D. En raison des renfoncements R1 dans chaque compartiment de chauffe 16 et de la position mutuelle des compartiments de chauffants 16 les uns par rapport aux autres, les renfoncements de deux compartiments de chauffe successifs délimitent un rectangle R dans lequel est agencé un module d'alimentation associé 200, comme représenté sur la figure 1E.

Les modules d'alimentation 200 ne participent que très peu au réchauffage de l'air compte tenu de leur position par rapport au flux d'air qui traverse le dispositif de chauffage. Les compartiments d'alimentation 20 constituent donc une zone peu "active" dans l'espace de chauffe délimité par le boîtier 15.

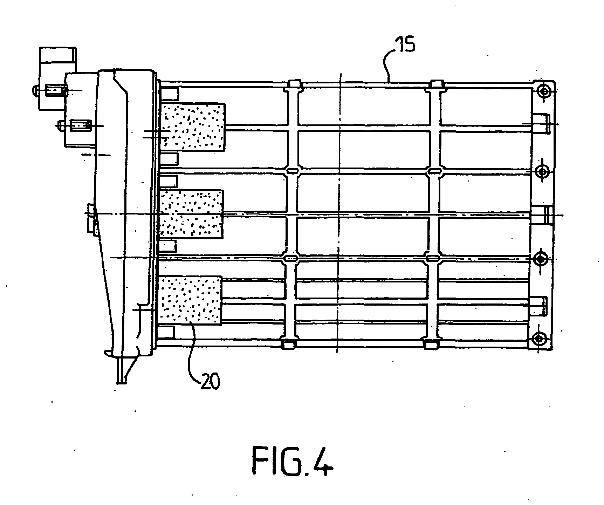

Or l'agencement et la structure des modules d'alimentation 200 dans le dispositif de chauffage permet de limiter l'espace occupé par cette zone peu active, représentée en noir sur la figure 4. Alors que dans des réalisations de l'art antérieur cette zone occupe environ 25% de l'espace de chauffe, dans le dispositif de chauffage selon l'invention, cette zone occupe environ 12% de l'espace de chauffe, ce qui permet d'améliorer les performances dispositif de chauffage.

Chaque module chauffant 14 est raccordé au module d'alimentation 200 associé par ses fiches de connexion 13 et 13'.

Les bus barres 55 et 56, représentés sur la figure 6, peuvent être fixés dans le boîtier 15 par boutrolage ou par surmoulage. Les connexions d'alimentation entre:
- le bus barre 56, qui est par exemple un bus barre de masse GND, et le module d'alimentation 202,
- le bus barre 55, qui est par exemple un bus barre de potentiel +12V et le module chauffant 14 via la fiche de connexion 13, et
- le module chauffant 14 et le module d'alimentation 200, via la fiche de connexion 13', sont réalisées par soudure électrique.

Les terminaux des bus 55 et 56, le module d'alimentation 200; et les fiches de connexion 13 et 13' d'un module chauffant 14 sont conformés pour laisser suffisamment de place à l'électrode de soudure lors du montage.

Sur la figure 6, les éléments de connexion du dispositif de chauffage au circuit de commande d'alimentation monté sur la carte de circuit imprimé sont représentés. La paroi latérale du boîtier 15 qui est raccordée au circuit de commande d'alimentation, comprend des bornes de connecteur 204 pour chaque module d'alimentation, une fiche de connexion 550 d'alimentation, provenant du bus barre +12V et une fiche de connexion 560 de masse, provenant du bus barre GND.

Dans un autre mode de réalisation de l'invention, chaque module d'alimentation 200 peut être raccordé à un seul module chauffant 14. Selon ce mode de réalisation, chaque module d'alimentation peut être raccordé au module chauffant associé pour former un élément modulaire. Chaque compartiment d'alimentation 20 forme alors avec le compartiment de chauffe 16 associé un compartiment modulaire.

Selon un autre aspect de l'invention, un couvercle 19 comportant des ouvertures de mêmes forme et dimensions que les compartiments 16 est fixé sur le boîtier 15 grâce à un système de raccord. Un tel couvercle peut être par exemple enfiché sur le boîtier 15 grâce à un système de raccord comprenant un ensemble d'encoches agencées sur les parois externes du boîtier 15 pour recevoir des clips ou agrafes formées dans le couvercle. En variante, le couvercle peut être fixé par collage par ultrason.

Ce couvercle peut comporter un système de calage et de positionnement des modules chauffants analogue à celui du boîtier 15.

Le boîtier 15 et le couvercle 19 délimitent ainsi, par les compartiments de chauffe 16, la section de passage de l'air à travers les modules chauffants 14, ce qui permet de réchauffer le flux d'air.

Le boîtier 15, le couvercle 19 et le capot 9 sont réalisés en matériaux isolants électriques tel qu'une matière plastique capable de supporter la température maximale atteinte en service, qui est de l'ordre de 150° C. Le boîtier 15 et le couvercle 19 peuvent être moulés en une seule pièce.

Selon un autre aspect de l'invention, le compartiment de commande d'alimentation 50 dans lequel est logé le circuit de commande d'alimentation est séparé des compartiments d'alimentation 20, ce qui permet de réduire les dimensions de la plaque de circuit imprimé par rapport à l'art antérieur et par suite les coûts du dispositif de chauffage.

Le dispositif de chauffage 8' peut comporter en complément des moyens de fixation et de guidage pour faciliter son montage et son intégration dans une installation de chauffage et de climatisation.

Les rubans métalliques 10 et 10' sont agencés dans un module chauffant de sorte que chacune des faces élémentaires définies par le plissement ou l'ondulation soit sensiblement parallèle à l'écoulement du flux d'air à travers le boîtier, ce qui permet de limiter les pertes de charge dues au passage de l'air dans le dispositif de chauffage.

Les rubans peuvent être recouverts d'une couche ayant une fonction d'isolation électrique, formée par exemple par un vernis isolant.

Chaque module chauffant 14 comporte les éléments qui lui permettent d'être indépendant et séparable des autres éléments constitutifs de l'espace de chauffe, à savoir une connexion à un interrupteur électronique 203 lui-même indépendant, des rubans métalliques 10 et 10' et un élément résistif CTP 12.

Ainsi, en cas de dysfonctionnement détecté sur un module chauffant donné, il est possible de remplacer ce module chauffant sans qu'il soit nécessaire de remplacer les autres modules chauffants contenus dans l'espace de chauffe.

De même, chaque module d'alimentation est indépendant des autres éléments constitutifs de l'espace de chauffe et peut être retiré ou ajouté à celui-ci sans modifier son fonctionnement général.

Cette architecture permet en outre de faire varier les performances du dispositif de chauffage et donc sa puissance calorifique totale. Ainsi, dans l'exemple de la figure 2, si la puissance calorifique d'un module chauffant est de 330W, il est possible d'obtenir une puissance calorifique totale de 1KW en utilisant 3 modules chauffants et de 2KW en utilisant 6 modules chauffants.

Ces performances peuvent être également modifiées par la quantité de pierres CTP utilisée dans les modules chauffants 14.

La même architecture de base d'un dispositif de chauffage selon l'invention permet donc d'obtenir des performances calorifiques variables, et ce sans utiliser d'outils supplémentaires.

Le dispositif de chauffage 8' de l'invention peut être intégré dans l'appareil de chauffage ou de climatisation de la figure 1A, mais n'est pas limité à cet exemple. Ainsi, le dispositif de chauffage de l'invention peut être intégré à un dispositif de climatisation de véhicule comprenant dans le canal 3, un évaporateur de circuit de réfrigération, en amont de l'échangeur de chaleur 8 occupant une partie de la section du canal.

L'invention propose également un procédé pour monter le dispositif de chauffage comprenant le boîtier 15, à partir de modules chauffants électriques 14 et de modules d'alimentation 200. Le procédé comprend les étapes consistant à:
1) placer les modules d'alimentation 200 dans le boîtier 15,
2) placer les modules chauffants 14 dans le boîtier 15,
3) positionner et fixer le couvercle 19 sur le boîtier 15,
4) effectuer une opération de soudage pour un raccord électrique entre chaque module d'alimentation et le groupe de modules chauffants associé,
5) positionner le circuit de commande d'alimentation électrique sur un compartiment de commande d'alimentation sur un côté du boîtier 15,
6) effectuer une opération de soudage supplémentaire pour un raccord électrique entre les connexions électriques et le circuit de commande d'alimentation,
7) positionner et fixer le capot 9 sur le compartiment de commande d'alimentation.

Bien évidemment, l'invention n'est pas limitée aux modes de réalisation décrits ci-avant. Elle englobe toutes les variantes de réalisation qui pourront être envisagées par l'homme du métier dans le cadre des revendications ci-après.

## Revendications

1. Dispositif de chauffage électrique, comprenant un boîtier (15) pouvant être traversé par de l'air à chauffer délimitant un espace de chauffe piloté par un circuit de commande d'alimentation électrique relié à une source d'alimentation, l'espace de chauffe comprenant des modules chauffants électriques (14), chaque module chauffant étant séparable de l'espace de chauffe et constitué par un premier et un deuxième rubans métalliques (10, 10') et par des éléments résistifs à coefficient de température positif (12) fixés entre les deux rubans métalliques, le boîtier (15) comportant des compartiments de chauffe (16) conformés pour loger un nombre de modules chauffants (14) choisi en fonction de la puissance calorifique totale requise, **caractérisé en ce que** le boîtier (15) comprend en outre des compartiments d'alimentation (20) conformés pour loger des modules d'alimentation (200) respectifs propres à être raccordés au circuit de commande d'alimentation électrique et à un groupe d'au moins un module chauffant (14), chaque module d'alimentation comprenant un élément de commutation électronique (203).

2. Dispositif de chauffage électrique selon la revendication 1, **caractérisé en ce que** les éléments résistifs à coefficient de température positif sont fixés entre les deux rubans métalliques, par collage.

3. Dispositif de chauffage électrique selon la revendication 1, **caractérisé en ce que** les éléments résistifs à coefficient de température positif sont fixés entre les deux rubans métalliques, par soudage.

4. Dispositif de chauffage électrique selon l'une des revendication précédentes, **caractérisé en ce que** le circuit de commande d'alimentation est disposé sur un côté du boîtier, dans un compartiment de commande d'alimentation (50) et **en ce que** les compartiments d'alimentation (20) sont disposés en parallèle à proximité du circuit de commande suivant une direction transversale (D) et à distance égale entre eux.

5. Dispositif de chauffage électrique selon l'une des revendication précédentes, **caractérisé en ce que** chaque module d'alimentation (200) comprend en outre un support métallique (202) relié à la source d'alimentation, sur lequel est fixé l'élément de commutation électronique (203).

6. Dispositif de chauffage électrique selon la revendication 5, **caractérisé en ce que** le support métallique (202) comporte un surmoulage (201) autour de l'élément de commutation électronique (203) propre à maintenir les connexions électriques (204) avec l'élément de commutation électronique.

7. Dispositif de chauffage électrique selon la revendication 6, **caractérisé en ce que** la zone délimitée par le surmoulage du support métallique (202) comprend un revêtement étanche (206) parmi le gel silicone, la colle et les composés qui permettent d'assurer une protection de l'élément de commutation électronique.

8. Dispositif de chauffage électrique selon l'une des revendications 6 et 7, **caractérisé en ce que** le support métallique (202) comprend des ouvertures de type persiennes (205) agencées sur sa surface, ces ouvertures étant traversées par l'air à réchauffer pour faciliter la dissipation de chaleur de l'élément de commutation électronique (203).

9. Dispositif de chauffage électrique selon l'une des revendications 1 à 8, **caractérisé en ce que** chaque ruban métallique (10, 10') d'un module chauffant (14) est maintenu sur au moins une barrette longitudinale (11a, 11'a) de longueur adaptée à celle des rubans.

10. Dispositif de chauffage électrique selon la revendication 9, **caractérisé en ce que** les barrettes (11a, 11'a) de chaque module chauffant (14) sont munies d'une fiche de connexion respective (13, 13') sur une extrémité, les fiches de connexion des barrettes étant disposées du même côté lors de l'assemblage du module chauffant (14).

11. Dispositif de chauffage électrique selon l'une des revendications précédentes, **caractérisé en ce que**, pour chaque module chauffant (14), le premier ruban métallique (10) a une longueur supérieure à celle du deuxième ruban métallique (10'), ce qui crée un renfoncement de forme générale rectangulaire (R1) dans le module chauffant.

12. Dispositif de chauffage électrique selon l'une des revendications précédentes, **caractérisé en ce que** les compartiments d'alimentation (20) ont une forme générale rectangulaire et **en ce que** la largeur d'un compartiment d'alimentation est sensiblement égale à la largeur d'un compartiment de chauffe (L).

13. Dispositif de chauffage électrique selon l'une des revendications précédentes, **caractérisé en ce que** chaque module d'alimentation (200) est propre à être raccordé à un groupe de deux modules chauffants (14.1, 14.2), et **en ce que** les deux modules chauffants sont disposés côte à côte.

14. Dispositif de chauffage électrique selon la revendication 13 prise en combinaison avec la revendication 11, **caractérisé en ce que** les compartiments de chauffe (16) successifs sont côte à côte et alignés suivant une direction transversale (D), les renfoncements de deux modules chauffants successifs formant ainsi un rectangle (R) dans lequel est agencé un compartiment d'alimentation (20).

15. Dispositif de chauffage électrique selon l'une des revendications 1 à 12, **caractérisé en ce que** chaque module d'alimentation (200) est propre à être raccordé à un module chauffant (14), et **en ce que** la module d'alimentation et le module chauffant associé sont raccordés pour former un élément modulaire, chaque compartiment d'alimentation formant avec un compartiment de chauffe associé un compartiment modulaire.

16. Dispositif de chauffage électrique selon l'une des revendications précédentes, **caractérisé en ce qu'**il comprend un couvercle (19) fixé sur le boîtier.

17. Dispositif de chauffage électrique selon l'une des revendications précédentes, **caractérisé en ce que** les rubans métalliques (10, 10') de chaque module chauffant (14) sont munis d'un revêtement isolant électrique et/ou de protection contre la corrosion.

18. Dispositif de chauffage électrique selon l'une des revendications précédentes, **caractérisé en ce que** le compartiment de commande d'alimentation (50) est séparé des compartiments d'alimentation (20).

19. Appareil de chauffage ou climatisation pour véhicule automobile, **caractérisé en ce qu'**il comporte un dispositif de chauffage électrique selon l'une des revendications 1 à 17.

20. Procédé de montage d'un dispositif de chauffage électrique selon l'une des revendications 1 à 17 comprenant un boîtier (15) pouvant être traversé par de l'air à chauffer, à partir de modules chauffants électriques et de modules d'alimentation (200) propres à être relié à un circuit de commande d'alimentation électrique et à un groupe d'au moins un module chauffant, **caractérisé en ce qu'**il comprend les étapes consistant à :
1) placer les modules d'alimentation (200) dans le boîtier (15),
2) placer les modules chauffants (14) dans le boîtier (15),
3) positionner et fixer un couvercle (19) sur le boîtier (15),
4) effectuer une opération de soudage pour un raccord électrique entre chaque module d'alimentation et le groupe de modules chauffants associé,
5) positionner le circuit de commande d'alimentation électrique sur un compartiment de commande d'alimentation sur un côté du boîtier (15),
6) effectuer une opération de soudage supplémentaire pour un raccord électrique entre les connexions électriques et le circuit de commande d'alimentation (50),
7) positionner et fixer un capot (9) sur le compartiment de commande d'alimentation.

## Patentansprüche

1. Elektrische Heizungseinrichtung, umfassend ein Gehäuse (15), das von Luft, die zu erwärmen ist, durchflossen werden kann, und das einen Heizraum begrenzt, der von einer Steuerschaltung für die elektrische Versorgung, die mit einer Versorgungsquelle verbunden ist, gesteuert wird, wobei der Heizraum elektrische Heizmodule (14) umfasst, wobei jedes Heizmodul vom Heizraum trennbar ist und von einem ersten und zweiten Metallband (10, 10') und von resistiven Elementen mit positivem Temperaturkoeffizienten (12) gebildet wird, die zwischen den beiden Metallbändern befestigt sind, wobei das Gehäuse (15) Heizfächer (16) umfasst, die angepasst sind, um eine Anzahl von Heizmodulen (14), die in Abhängigkeit von der erforderlichen Gesamtheizleistung ausgewählt wird, unterzubringen, **dadurch gekennzeichnet, dass** das Gehäuse (15) des Weiteren Versorgungsfächer (20) umfasst, die angepasst sind, um entsprechende Versorgungsmodule (200) unterzubringen, die imstande sind, an die Steuerschaltung für die elektrische Versorgung und an eine Gruppe mit mindestens einem Heizmodul (14) angeschlossen zu werden, wobei jedes Versorgungsmodul ein elektronisches Schaltelement (203) umfasst.

2. Elektrische Heizungseinrichtung nach Anspruch 1, **dadurch gekennzeichnet, dass** die resistiven Elemente mit positivem Temperaturkoeffizienten durch Verkleben zwischen den beiden Metallbändern befestigt werden.

3. Elektrische Heizungseinrichtung nach Anspruch 1, **dadurch gekennzeichnet, dass** die resistiven Elemente mit positivem Temperaturkoeffizienten durch Verschweißen zwischen den beiden Metallbändern befestigt werden.

4. Elektrische Heizungseinrichtung nach einem der vorhergehenden Ansprüche, **dadurch gekennzeichnet, dass** die Steuerschaltung für die Versorgung auf einer Seite des Gehäuses in einem Steuerfach für die Versorgung (50) angeordnet ist, und **dadurch,** dass die Versorgungsfächer (20) parallel in der Nähe der Steuerschaltung gemäß einer Querrichtung (D) und in gleichem Abstand voneinander angeordnet sind.

5. Elektrische Heizungseinrichtung nach einem der vorhergehenden Ansprüche, **dadurch gekennzeichnet, dass** jedes Versorgungsmodul (200) des Weiteren eine Metallgrundplatte (202) umfasst, die mit der Versorgungsquelle verbunden ist, und auf der das elektronische Schaltelement (203) befestigt ist.

6. Elektrische Heizungseinrichtung nach Anspruch 5, **dadurch gekennzeichnet, dass** die Metallgrundplatte (202) eine Umspritzung (201) rund um das elektronische Schaltelement (203) umfasst, die imstande ist, die elektrischen Anschlüsse (204) mit dem elektronischen Schaltelement zu halten.

7. Elektrische Heizungseinrichtung nach Anspruch 6, **dadurch gekennzeichnet, dass** der von der Umspritzung der Metallgrundplatte (202) begrenzte Bereich eine dichte Verkleidung (206) unter dem Silikongel, dem Kleber und den Verbindungen umfasst, die es ermöglichen, einen Schutz des elektronischen Schaltelements sicherzustellen.

8. Elektrische Heizungseinrichtung nach einem der Ansprüche 6 und 7, **dadurch gekennzeichnet, dass** die Metallgrundplatte (202) schlitzartige Öffnungen (205) umfasst, die auf ihrer Oberfläche angeordnet sind, wobei diese Öffnungen von der zu erwärmenden Luft durchflossen werden, um die Wärmedissipation des elektronischen Schaltelements (203) zu erleichtern.

9. Elektrische Heizungseinrichtung nach einem der Ansprüche 1 bis 8, **dadurch gekennzeichnet, dass** jedes Metallband (10, 10') eines Heizmoduls (14) auf mindestens einer Längsleiste (11a, 11'a) gehalten wird, deren Länge an jene der Bänder angepasst ist.

10. Elektrische Heizungseinrichtung nach Anspruch 9, **dadurch gekennzeichnet, dass** die Leisten (11a, 11'a) von jedem Heizmodul (14) jeweils an einem Ende mit einem Verbindungsstecker (13, 13') ausgestattet sind, wobei die Verbindungsstecker der Leisten beim Zusammensetzen des Heizmoduls (14) auf derselben Seite angeordnet werden.

11. Elektrische Heizungseinrichtung nach einem der vorhergehenden Ansprüche, **dadurch gekennzeichnet, dass** bei jedem Heizmodul (14) das erste Metallband (10) eine Länge aufweist, die größer ist als jene des zweiten Metallbandes (10'), was im Heizmodul eine Vertiefung mit einer im Wesentlichen rechteckigen Form (R1) schafft.

12. Elektrische Heizungseinrichtung nach einem der vorhergehenden Ansprüche, **dadurch gekennzeichnet, dass** die Versorgungsfächer (20) eine im Wesentlichen rechteckige Form aufweisen, und **dadurch,** dass die Breite eines Versorgungsfaches im Wesentlichen gleich groß ist wie die Breite eines Heizfaches (L).

13. Elektrische Heizungseinrichtung nach einem der vorhergehenden Ansprüche, **dadurch gekennzeichnet, dass** jedes Versorgungsmodul (200) imstande ist, mit einer Gruppe von zwei Heizmodulen (14.1, 14.2) verbunden zu werden, und **dadurch,** dass die beiden Heizmodule Seite an Seite angeordnet sind.

14. Elektrische Heizungseinrichtung nach Anspruch 13, in Kombination mit Anspruch 11, **dadurch gekennzeichnet, dass** sich die aufeinander folgenden Heizfächer (16) Seite an Seite und gemäß einer Querrichtung (D) ausgerichtet befinden, wobei die Vertiefungen von zwei aufeinander folgenden Heizmodulen somit ein Rechteck (R) bilden, in dem ein Versorgungsfach (20) angeordnet ist.

15. Elektrische Heizungseinrichtung nach einem der Ansprüche 1 bis 12, **dadurch gekennzeichnet, dass** jedes Versorgungsmodul (200) imstande ist, mit einem Heizmodul (14) verbunden zu werden, und **dadurch,** dass das Versorgungsmodul und das zugeordnete Heizmodul verbunden werden, um ein modulares Element zu bilden, wobei jedes Versorgungsfach mit einem zugeordneten Heizfach ein modulares Fach bildet.

16. Elektrische Heizungseinrichtung nach einem der vorhergehenden Ansprüche, **dadurch gekennzeichnet, dass** sie einen Deckel (19) umfasst, der auf dem Gehäuse befestigt ist.

17. Elektrische Heizungseinrichtung nach einem der vorhergehenden Ansprüche, **dadurch gekennzeichnet, dass** die Metallbänder (10, 10') von jedem Heizmodul (14) mit einer elektrischen Isolierverkleidung und/oder Schutzverkleidung gegen Korrosion ausgestattet sind.

18. Elektrische Heizungseinrichtung nach einem der vorhergehenden Ansprüche, **dadurch gekennzeichnet, dass** das Steuerfach für die Versorgung (50) von den Versorgungsfächern (20) getrennt ist.

19. Heiz- oder Klimagerät für ein Kraftfahrzeug, **dadurch gekennzeichnet, dass** es eine elektrische Heizungseinrichtung nach einem der Ansprüche 1 bis 17 umfasst.

20. Verfahren für die Montage einer elektrischen Heizungseinrichtung nach einem der Ansprüche 1 bis 17, umfassend ein Gehäuse (15), das von Luft, die zu erwärmen ist, durchflossen werden kann, ausgehend von elektrischen Heizmodulen und Versorgungsmodulen (200), die imstande sind, an eine Steuerschaltung für die elektrische Versorgung und an eine Gruppe mit mindestens einem Heizmodul angeschlossen zu werden, **dadurch gekennzeichnet, dass** es folgende Schritte umfasst:
1) Platzieren der Versorgungsmodule (200) im Gehäuse (15),
2) Platzieren der Heizmodule (14) im Gehäuse (15),
3) Positionieren und Befestigen eines Deckels (19) auf dem Gehäuse (15),
4) Ausführen eines Schweißvorgangs für eine elektrische Verbindung zwischen jedem Versorgungsmodul und der zugeordneten Gruppe von Heizmodulen,
5) Positionieren der Steuerschaltung für die elektrische Versorgung auf einem Steuerfach für die Versorgung auf einer Seite des Gehäuses (15),
6) Ausführen eines zusätzlichen Schweißvorgangs für eine elektrische Verbindung zwischen den elektrischen Anschlüssen und der Steuerschaltung für die Versorgung (50),
7) Positionieren und Befestigen einer Schutzhaube (9) auf dem Steuerfach für die Versorgung.

## Claims

1. Heating device, comprising a box (15) able to have air to be heated pass through it, delimiting a heating space controlled by an electrical supply control circuit connected to a power supply source, the heating space comprising electric heating modules (14), each heating module being able to be separated from the heating space and consisting of a first and a second metal strips (10, 10') and resistive elements with a positive temperature coefficient (12) fixed between the two metal strips, the box (15) comprising heating compartments (16) conformed so as to house a number of heating modules (14) chosen according to the total heat output required, **characterised in that** the box (15) also comprises power supply compartments (20) conformed so as to house respective power supply modules (200) able to be connected to the electrical supply control circuit and to a group of at least one heating module (14), each power supply module comprising an electronic switching element (203).

2. Heating device according to claim 1, **characterised in that** the resistive elements with a positive temperature coefficient are fixed between the two metal strips, by adhesive bonding.

3. Heating device according to claim 1, **characterised in that** the resistive elements with a positive temperature coefficient are fixed between the two metal strips by welding.

4. Heating device according to one of the preceding claims, **characterised in that** the power supply control circuit is disposed on one side of the box, in a power supply control compartment (50), and **in that** the power supply compartments (20) are disposed in parallel in the vicinity of the control circuit in a transverse direction (D) and at equal distances between them.

5. Heating device according to one of the preceding claims, **characterised in that** each power supply module (200) also comprises a metal support (202) connected to the power supply source, to which the electronic switching element (203) is fixed.

6. Heating device according to claim 5, **characterised in that** the metal support (202) comprises an insert moulding (201) around the electronic switching element (203) able to hold the electrical connections (204) with the electronic switching element.

7. Heating device according to Claim 6, **characterised in that** the zone delimited by the insert moulding of the metal support (202) comprises an impervious covering (206) from amongst silicone gel, adhesive and compounds that provide protection of the electronic switching element.

8. Heating device according to one of claims 6 and 7, **characterised in that** the metal support (202) comprises openings of the Persian blind type (205) arranged on its surface, these openings having the air to be heated pass through them in order to facilitate the dissipation of heat from the electronic switching element (203).

9. Heating device according to one of claims 1 to 8, **characterised in that** each metal strip (10, 10') of a heating module (14) is held on at least one longitudinal bar (11a, 11'a) with a length adapted to that of the strips.

10. Heating device according to claim 9, **characterised in that** the bars (11a, 11'a) of each heating module (14) are provided with a respective connecting plug (13, 13') on one end, the connecting plugs for the bars being disposed on the same side when the heating module (14) is assembled.

11. Heating module according to one of the preceding claims, **characterised in that,** for each heating module (14), the first metal strip (10) has a length greater than that of the second metal strip (10'), which creates an indentation with a roughly rectangular shape (R1) in the heating module.

12. Heating device according to one of the preceding claims, **characterised in that** the power supply compartments (20) have a roughly rectangular shape and **in that** the width of a power supply compartment is substantially equal to the width of a heating compartment (L).

13. Heating device according to one of the preceding claims, **characterised in that** each power supply module (200) is able to be connected to a group of two heating modules (14.1, 14.2) and **in that** the two heating modules are disposed side by side.

14. Heating device according to claim 13 taken in combination with claim 11, **characterised in that** the successive heating compartments (16) are side by side and aligned in a transverse direction (D), the indentations in two successive heating modules thus forming a rectangle (R) in which a power supply compartment (20) is arranged.

15. Heating device according to one of claims 1 to 12, **characterised in that** each supply module (200) is able to be connected to a heating module (14) and **in that** the power supply module and the associated heating module are connected so as to form a modular element, each power supply compartment forming, with an associated heating compartment, a modular compartment.

16. Heating device according to one of the preceding claims, **characterised in that** it comprises a cover (19) fixed to the box.

17. Heating device according to one of the preceding claims, **characterised in that** the metal strips (10, 10') of each heating module (14) are provided with an electrically insulating covering and/or one for protecting against corrosion.

18. Heating device according to one of the preceding claims, **characterised in that** the power supply control compartment (50) is separate from the power supply compartments (20).

19. Heating or air conditioning appliance for a motor vehicle, **characterised in that** it comprises a heating device according to claims 1 to 17.

20. Method of mounting a heating device according to one of claims 1 to 17, comprising a box (15) able to have air to be heated pass through it, from electrical heating modules and power supply modules (200) able to be connected to an electrical supply control circuit and to a group of at least one heating module, **characterised in that** it comprises the steps consisting of:
1) placing the power supply modules (200) in the box (15),
2) placing the heating modules (14) in the box (15)
3) positioning and fixing a cover (19) on the box (15),
4) performing a welding operation for an electrical connection between each power supply module and the associated group of heating modules,
5) positioning the electrical supply control circuit on a power supply control compartment on one side of the box (15)
6) performing an additional welding operation for an electrical link between the electrical connections and the power supply control circuit (50),
7) positioning and fixing a cap (9) on the power supply control compartment.
